# EUROPÄISCHE PATENTSCHRIFT

(11) **EP 3 304 404 B1**
(45) Veröffentlichungstag und Bekanntmachung des Hinweises auf die Patenterteilung: **15.07.2020**
(21) Anmeldenummer: 16722789.1
(22) Anmeldetag: 10.05.2016
(51) Int. Cl.: G06F 21/60, G06F 3/12, H04L 29/06

(54) **VERFAHREN ZUM HERSTELLEN VON ERSATZTEILEN FÜR VERPACKUNGSMASCHINEN**
METHOD FOR PRODUCING SPARE PARTS FOR PACKAGING MACHINES
PROCÉDÉ DE FABRICATION DE PIÈCES DE RECHANGE DE MACHINES D'EMBALLAGE

(30) Priorität: 26.05.2015 DE 102015006512
(43) Veröffentlichungstag der Anmeldung: 11.04.2018
(73) Patentinhaber: Focke & Co. (GmbH & Co. KG), 27283 Verden (DE)
(72) Erfinder: BUSE, Henry, 27374 Visselhövede (DE); ENGEL, Gisbert, 27308 Kirchlinteln-Luttum (DE); ZEYN, Fabian, 27313 Dörverden (DE)
(74) Vertreter: Aulich, Martin
(86) Internationale Anmeldenummer: PCT/EP2016/000759
(87) Internationale Veröffentlichungsnummer: WO 2016/188611

(56) Entgegenhaltungen:
- EP-A1- 2 701 090
- US-A1- 2014 223 583
- US-A1- 2015 052 025

## Beschreibung

Die vorliegende Erfindung betrifft ein Verfahren zum Herstellen von Ersatzteilen für eine Maschine zur Herstellung von Verpackungen für rauchbare Produkte, insbesondere für Zigaretten.

Ersatzteile für Zigarettenverpackungsmaschinen werden in der Regel von dem jeweiligen Maschinenhersteller gefertigt und anschließend zu dem Benutzer der Maschine bzw. dem Zigarettenproduzenten transportiert, bei dem die jeweilige Verpackungsmaschine im Einsatz ist. Zuvor hat der Zigarettenproduzent, also der jeweilige Kunde des Maschinenherstellers, einen entsprechenden Ersatzteilbedarf festgestellt und das Ersatzteil bei dem Maschinenhersteller bestellt. Die Bestellabwicklung, die Fertigungszeit für das Ersatzteil sowie die Transportzeiten für den Transport desselben vom Maschinenhersteller zum Zigarettenproduzenten sind wichtige Parameter, die die Kostenbildung des jeweiligen Ersatzteils maßgeblich beeinflussen. Zudem haben diese ggf. Einfluss auf die Dauer etwaiger Ausfallzeiten der jeweiligen Maschine.

Die US 2014/0223583 beschäftigt sich mit Managementsystemen für die sogenannte digitale Produktion, bei der mittels Produktionsmaschinen, beispielsweise mit einem 3D-Drucker, Produkte aus Datensätzen gefertigt werden, die der Produktionsmaschine beispielsweise per Datenfernübertragung zur Verfügung gestellt werden. Die US 2014/0223583 hat als Ziel zu verhindern, dass solche Daten in nicht autorisierte Hände fallen. Zu diesem Zweck ist eine digitale (Computer-)Plattform als Vermittlungsebene vorgesehen, der die Produktdaten zur Verfügung gestellt werden und die diese Produktdaten anschließend an die Produktionsmaschine weiterleitet.

Die EP 2 701 090 A1 beschäftigt sich mit Konzepten, mit denen im Umfeld von 3D Rapid Prototyping sichergestellt werden kann, dass bei einer Herstellung eines 3D Produktes keine IP-Rechte Dritter verletzt werden. Zu diesem Zweck ist vorgesehen, dass ein Computer-System eine Datenbank daraufhin durchsucht, ob für das 3D Produkt, das hergestellt werden soll, eine Rechte-Einschränkung hinterlegt ist, aufgrund derer die Produktion desselben rechtlich unzulässig wäre. Bejahendenfalls ist unter anderem weiter vorgesehen, dass eine an das System angeschlossene Produktionsmaschine zur Herstellung von 3D-Produkten ein Signal erhält, das die Produktion des 3D Produktes unterbindet.

Die US 2015/052025 A1 beschreibt ein Verfahren zur Abwicklung von Bestellungen, bei denen die bestellten Artikel mit 3D-Druckern hergestellt werden können. Nach manueller Bestellung eines Artikels durch einen Benutzer bei einem Service-Provider erhält dieser Produktionsdaten, beispielsweise von einem Hersteller des Artikels, und leitet sie an den Benutzer weiter. Der Benutzer kann dann den bestellten Artikel bei sich vor Ort durch einen 3D-Drucker erstellen. Alternativ können die Produktionsdaten auch an einen entfernten 3D-Drucker, beispielsweise in einem Lager, gesendet werden, in dem der Artikel dann hergestellt und von dem Benutzer abgeholt bzw. an diesen geliefert wird.

Ausgehend hiervon ist es Aufgabe der vorliegenden Erfindung, ein Verfahren der eingangs genannten Art anzugeben, mit dem dem Benutzer der Verpackungsmaschine in schneller sowie kostengünstiger Weise Ersatzteile für die Verpackungsmaschine zur Verfügung gestellt werden können.

Diese Aufgabe wird gelöst durch ein Verfahren mit den Merkmalen des Anspruchs 1 sowie ein Verfahren mit den Merkmalen des Anspruchs 12.

Gemäß der Lösung des Anspruchs 1 zeichnet sich das eingangs genannte Verfahren durch folgende weitere Schritte aus:
a) Prüfen des Verschleißes und/oder der Funktionsfähigkeit von mindestens einem Bauteil (30), das als Ersatzteil (16) von einer einem Maschinenbenutzer zugeordneten, einen 3D-Drucker (15) umfassenden Ersatzteilherstelleinrichtung (14) herstellbar ist, durch die Verpackungsmaschine im Betrieb der Verpackungsmaschine,
b) Anfordern einer Übermittlung von Produktionsdaten für die Herstellung eines Ersatzteils (16) für das Bauteil (30), wenn ein Verschleiß und/oder eine Funktionsunfähigkeit des Bauteils (30) festgestellt wird, der/die einen Austausch desselben erforderlich macht, von einer ersten, insbesondere dem Hersteller der Maschine (10) zugeordneten Recheneinheit (13) durch eine zweite, insbesondere dem Benutzer der Maschine (10) zugeordnete Recheneinheit (11) per Datenfernübertragung, vorzugsweise über ein Kommunikationsnetzwert, etwa das Internet,
c) Verschlüsseln von für die Produktion des Ersatzteils (16) erforderlichen, digitalen Produktionsdaten,
d) Übermitteln der verschlüsselten Produktionsdaten von einer ersten, insbesondere dem Hersteller der Maschine (10) zugeordneten Recheneinheit (13), zu einer zweiten, insbesondere dem Benutzer der Maschine (10) zugeordneten Recheneinheit (11) per Datenfernübertragung, vorzugsweise über ein Kommunikationsnetzwerk, etwa das Internet,
e) Entschlüsseln der übermittelten, verschlüsselten Produktionsdaten,
f) Herstellen des Ersatzteils (16) mit der dem Maschinenbenutzer zugeordneten, einen 3D-Drucker (15) umfassenden Ersatzteilherstelleinrichtung (14) nach Maßgabe der übermittelten Produktionsdaten.

In weiterer Ausbildung der Erfindung wird die Übermittlung der Produktionsdaten zuvor per Datenfernübertragung bzw. über das Kommunikationsnetzwerk angefordert. Insbesondere, indem die zweite Recheneinheit der ersten Recheneinheit entsprechende Anforderungsdaten übermittelt.

Diese Anforderungsdaten können Daten zur Feststellung der Berechtigung der Anforderung der Produktionsdaten umfassen - Authentifizierungsdaten -. Diese Authentifizierungsdaten werden geprüft, insbesondere von der ersten Recheneinheit. Die Übermittlung der Produktionsdaten erfolgt in diesem Fall nur dann, wenn die Prüfung ergibt, dass die Anfrage berechtigt ist. Beispielsweise wenn die Authentifizierungsdaten mit Daten übereinstimmen, die in einer der ersten Recheneinheit zugeordneten Datenbank hinterlegt sind.

Die Anforderungsdaten umfassen vorzugsweise das zu produzierende Ersatzteil bzw. das zu ersetzende Bauteil identifizierende Identifizierungsdaten, wie etwa eine Bauteilkennung des benötigen Ersatzteils/Bauteils oder das benötigte Ersatzteil/das Bauteil beschreibende Bilddaten.

Die Identifizierungsdaten können dabei dem zu ersetzenden Bauteil der Verpackungsmaschine zugeordnet sein. Beispielsweise können sie auf dem jeweiligen Bauteil auslesbar angeordnet sein.

Die Identifizierungsdaten können automatisch oder durch einen Bediener erfasst werden. Sie können beispielsweise mittels eines Lesegeräts ausgelesen und dann als Teil der Anforderungsdaten der ersten Recheneinheit übermittelt werden. Sie können aber auch unabhängig von den Anforderungsdaten separat übersandt werden.

Das Erfassen bzw. Auslesen und/oder Einbinden der Identifizierungsdaten in die Anforderungsdaten kann vollautomatisch erfolgen, aber auch teilautomatisch oder händisch durch einen Werker.

Erfindungsgemäß ist demnach vorgesehen, dass insbesondere die Verpackungsmaschine den Verschleiß und/oder die Funktionsfähigkeit von Bauteilen, die als Ersatzteile der Ersatzteilherstelleinrichtung herstellbar sind, im Betrieb der Verpackungsmaschine prüft, und dass die zweite Recheneinheit die Übermittlung der Produktionsdaten von der ersten Recheneinheit per Datenfernübertragung anfordert, sobald insbesondere die Verpackungsmaschine einen Verschleiß feststellt bzw. eine Funktionsunfähigkeit, der/die einen Austausch des Bauteils erforderlich macht.

Insbesondere können dabei die Identifizierungsdaten des benötigten Bauteils übermittelt werden. Beispielsweise auch in der geschilderten Weise automatisch erfasste bzw. ausgelesene Identifizierungsdaten.

Die Ersatzteilherstelleinrichtung kann auch eine optische Vermessungseinheit umfassen, insbesondere einen 3D-Scanner, die das durch ein Ersatzteil zu ersetzende Bauteil vermisst. Die gemessenen Daten werden dann, insbesondere automatisch, per Datenfernübertragung an die erste Recheneinheit übermittelt. Insbesondere der Maschinenhersteller oder die erste Recheneinheit übermitteln dann die Produktionsdaten zur Herstellung des Ersatzteils nach Maßgabe der gemessenen und an ihn übermittelten Daten an den Maschinenbenutzer.

Weiter kann vorgesehen sein, dass an dem hergestellten Ersatzteil eine Qualitätskontrolle durchgeführt wird, und dass für den Fall, dass die Qualitätskontrolle ergibt, dass die Qualität des Ersatzteils vorbestimmten Anforderungen entspricht, diesen Umstand repräsentierende Freigabedaten an den Maschinenbenutzer gesendet werden, insbesondere an die zweite Recheneinheit.

Dabei kann auch vorgesehen sein, dass die Maschinensteuerung nach Einbau des fertiggestellten Ersatzteils in die Maschine prüft, ob für das Ersatzteil ein Freigabecode vorliegt. Sollte dies nicht der Fall sein, kann vorgesehen sein, dass die Maschine ein diesen Umstand repräsentierendes Signal erzeugt. Insbesondere kann vorgesehen sein, dass die Maschine in diesem Fall in einen Störungsmodus überführt wird.

Die vorgenannten Freigabedaten können bspw. als Code oder dergleichen dem Ersatzteil zugeordnet werden. Dabei könnte auch vorgesehen sein, dass die Ersatzteilherstelleinrichtung nach Maßgabe der Freigabedaten einen Freigabecode auf das Ersatzteil aufbringt oder einen mit dem Ersatzteil verbindbaren Freigabecodeträger fertigt.

Die Qualitätskontrolle kann automatisch oder händisch mittels mindestens einer, Rückschlüsse auf die Qualität des Ersatzteils erlaubenden Prüfeinrichtung durchgeführt werden. Bei der Prüfeinrichtung kann es sich beispielsweise um eine oder die optische Vermessungseinheit handeln, insbesondere einen 3D-Scanner. Es ist denkbar, dass die Messergebnisse der Prüfeinrichtung automatisch mit Sollwerten verglichen werden, die in einer der ersten Recheneinheit zugeordneten Datenbank hinterlegt sind, und dass die Freigabedaten nach Maßgabe dieses Vergleichs nur dann an den Maschinenbenutzer gesandt werden, wenn der Vergleich ergibt, dass das Ersatzteil vorbestimmte Qualitätskriterien erfüllt.

Was die Produktionsdaten betrifft, so umfassen sie bevorzugt Steuerungsdaten für eine Steuerungseinrichtung der Ersatzteilherstelleinrichtung, nach Maßgabe derer die Steuereinrichtung die Ersatzteilherstelleinrichtung dann während der Herstellung des Ersatzteils steuert.

Die Produktionsdaten können darüber hinaus auch Handlungsanweisungen für einen Werker umfassen, und zwar Handlungsanweisungen, die den Herstellprozess des Ersatzteils in der Ersatzteilherstelleinrichtung betreffen.

Die Produktionsdaten können des Weiteren mindestens ein Maschinenprogramm für die Steuerung von mindestens einer dem Maschinenbenutzer zugeordneten Werkzeugmaschine umfassen, das derart ausgebildet ist, dass das Ersatzteil mit der Werkzeugmaschine nachbearbeitet werden kann.

Eine eigenständige Ausführungsform der Erfindung zeichnet sich durch die Merkmale des Anspruchs 12 aus. Dieses umfasst folgende Schritte:
a) Prüfen des Verschleißes und/oder der Funktionsfähigkeit von mindestens einem Bauteil (30), das als Ersatzteil (16) von einer einem Maschinenbenutzer zugeordneten, einen 3D-Drucker (15) umfassenden Ersatzteilherstelleinrichtung (14) herstellbar ist, durch die Verpackungsmaschine im Betrieb der Verpackungsmaschine,
b) Vermessen eines Ersatzteils (16) mittels eines dem Maschinenbenutzer zugeordneten, optischen Vermessungsgeräts (20), insbesondere eines 3D-Scanners, wenn ein Verschleiß und/oder eine Funktionsunfähigkeit des Bauteils (30) festgestellt wird, der/die einen Austausch desselben erforderlich macht,
c) Herstellen des Ersatzteils (16) nach Maßgabe der Messdaten mittels einer dem Maschinenbenutzer zugeordneten, einen 3D-Drucker (15) umfassenden Ersatzteilherstelleinrichtung (14).

In weiterer Ausbildung dieses Verfahrens können folgende weiteren Schritte vorgesehen sein:
d) Übermitteln von das Ersatzteil identifizierenden Daten an eine erste, insbesondere dem Maschinenhersteller zugeordnete Recheneinheit,
e) Übermitteln eines Freigabecodes an den Maschinenbenutzer,
f) Freischalten der dem Maschinenbenutzer zugeordneten Ersatzeilherstelleinrichtung mittels des Freigabecodes, sodass die Ersatzteilherstelleinrichtung anschließend das Ersatzteil nach Maßgabe der Messdaten herstellen kann,
g) Herstellen des Ersatzteils durch die freigeschaltete Ersatzteilherstelleinrichtung.

Dieses Verfahren kann auch kombiniert werden mit Aspekten des zuvor beschriebenen Verfahrens.

Weitere Merkmale der vorliegenden Erfindung ergeben sich aus den beigefügten Patentansprüchen, der nachfolgenden Beschreibung bevorzugter Ausführungsbeispiele der Erfindung sowie aus den beigefügten Zeichnungen.

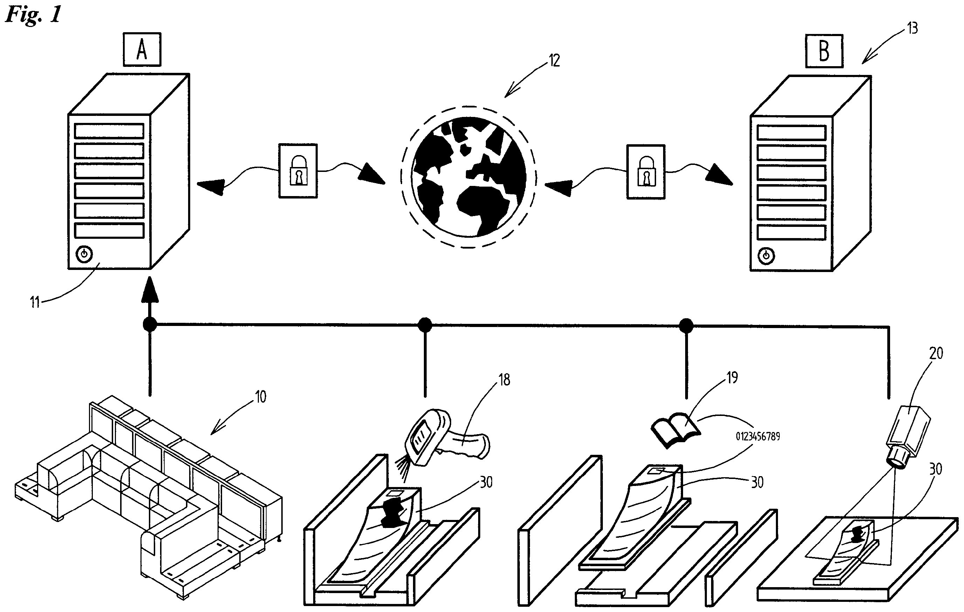

Darin zeigen die Fig. 1 bis 5 verschiedene Aspekte des erfindungsgemäßen Verfahrens in schematischer Ansicht.

Verpackungsmaschinen 10 für die Verpackung von rauchbaren Produkten, wie etwa Zigaretten, wie sie beispielhaft in Fig. 1 gezeigt ist, sind im Stand der Technik gut bekannt. Das erfindungsgemäße Verfahren ermöglicht es Benutzern von Verpackungsmaschinen 10, wie etwa dem jeweiligen Zigarettenproduzenten, Ersatzteile 16 für eine solche Maschine 10 eigenständig vor Ort herstellen zu können, das heißt an dem Ort, an dem die Verpackungsmaschine zur Verpackung der Produkte eingesetzt wird.

Zu diesem Zweck ist vorgesehen, dem Maschinenbenutzer eine erste Recheneinheit 11 zuzuordnen. In der Regel wird diese sich am Einsatzort der Verpackungsmaschine 10 befinden, also in der entsprechenden Fabrikhalle etc. Denkbar ist aber theoretisch auch, dass die Recheneinheit 11 an einem hiervon entfernten Ort positioniert ist.

Die dem Maschinenbenutzer zugeordnete Recheneinheit 11 kann über ein Kommunikationsnetzwerk 12, wie etwa das Internet, mit einer zweiten, im vorliegenden Fall dem Verpackungsmaschinenhersteller zugeordneten Recheneinheit 13 kommunizieren.

Auf die genaue Art der Recheneinheiten 11 und 13 kommt es nicht an. Es kann sich beispielsweise um einen üblichen PC handeln, einen (Industrie-)PC, einen Server oder dergleichen.

Wenn für die Verpackungsmaschine 10 ein Ersatzteil 16 benötigt wird, etwa da ein dem Ersatzteil 16 entsprechendes, in die Maschine 10 eingebautes, zu ersetzendes Bauteil 30 funktionsunfähig geworden ist und/oder da es einen bestimmten Verschleißgrad überschritten hat, kann der Maschinenbenutzer dieses vor Ort herstellen. Zu diesem Zweck verfügt der Maschinenbenutzer über eine ihm zugeordnete Ersatzteilherstellungseinrichtung 14. In der Regel wird diese durch den Maschinenhersteller zur Verfügung gestellt.

Diese Ersatzteilherstellungseinrichtung 14 umfasst im einfachsten Fall einen 3D-Drucker 15. 3D-Drucker sind im Stand der Technik gut bekannt. Sie können sowohl subtraktiv als auch additiv arbeitend ausgebildet sein.

Um die dem Maschinenbenutzer zugeordnete Herstelleinrichtung 14 in die Lage zu versetzen, das benötigte Ersatzteil 16 herstellen zu können, übermittelt die dem Maschinenhersteller zugeordnete Recheneinheit 13 der Recheneinheit 11 - bevorzugt über eine sichere Verbindung - verschlüsselte, für die Herstellung bzw. Produktion des Ersatzteils 16 mit der Ersatzteilherstelleinrichtung 14 erforderliche, digitale Produktionsdaten. Diese Produktionsdaten können in einer Datenbank bzw. in einem Informationsspeicher (Festplatte etc.) des Maschinenherstellers hinterlegt sein.

Die Produktionsdaten werden von der Recheneinheit 11 an die Herstelleinrichtung 14 übertragen. Die Recheneinheit 11 kann auch Teil der Herstelleinrichtung 14 sein.

Auf Basis der empfangenen, beispielsweise durch die Recheneinheit 11 entschlüsselten Produktionsdaten druckt bzw. fertigt der 3D-Drucker 15 der Herstelleinrichtung 14 dann das jeweilige Ersatzteil 16. Die Produktionsdaten umfassen dabei insbesondere zu dem zu druckenden Ersatzteil 16 passende Fertigungs- bzw. Druckdaten. Also Daten, mit Hilfe derer die Herstelleinrichtung 14, insbesondere der 3D-Drucker 15, so gesteuert werden kann, dass im Ergebnis das Ersatzteil 16 gefertigt wird.

Die Produktionsdaten können dabei auch CAD-Daten umfassen, die dann ggf. noch entweder von der Recheneinheit 11 oder von dem 3D-Drucker 15 entsprechend in ein geeignetes, von der Druckeinheit des 3D-Druckers 15 verarbeitbares Format umgewandelt werden können.

Die Übermittlung der Produktionsdaten durch die Recheneinheit 13 erfolgt regelmäßig nach einer Anforderung durch den Maschinenbenutzer bzw. durch die diesem zugeordnete Recheneinheit 11. Zu diesem Zweck kann die Recheneinheit 11 über das Kommunikationsnetz 12 entsprechende, eine solche Anforderung repräsentierende Anforderungsdaten an die Recheneinheit 13 senden.

Vorzugsweise umfassen solche Anforderungsdaten auch Informationen bzw. Daten zur Authentifizierung der Recheneinheit 11 bzw. zum Nachweis der Berechtigung der gestellten Anfrage. Dies soll sicherstellen, dass nicht unberechtigte Personen an die Produktionsdaten für das jeweilige Ersatzteil gelangen können.

Konkret könnte beispielsweise nach entsprechender Authentifizierung vorgesehen sein, dass die Recheneinheit 11 bzw. ein Bediener mithilfe der Recheneinheit 11die Produktionsdaten über das Kommunikationsnetzwerk 12, wie etwa das Internet, von der beispielsweise als Server ausgebildeten Recheneinheit 13 des Maschinenherstellers herunterlädt. Alternativ könnte auch eine Einzelübermittlung der benötigten Produktionsdaten per E-Mail nach Einzelanforderung durch den Maschinenbenutzer erfolgen. Betriebswirtschaftlich könnte dabei die Berechtigung zum Download bzw. zum Empfang solcher Produktionsdaten an entsprechende Lizenzvereinbarungen zwischen Maschinenbenutzer und Maschinenhersteller geknüpft werden.

Die Anforderung der Produktionsdaten durch den Maschinenbenutzer bzw. durch die Recheneinheit 11 kann vollautomatisiert erfolgen.

Beispielsweise kann vorgesehen sein, dass die Maschinensteuerung der Verpackungsmaschine 10 den Verschleiß von als Ersatzteil 16 druckbaren Bauteilen 30 überwacht und/oder allgemein deren Funktionsfähigkeit, und dass bei Detektion eines bestimmten Verschleißgrades bzw. bei Feststellen einer Funktionsunfähigkeit, der/die einen Austausch des Bauteils 30 erforderlich macht, automatisch die zu dem benötigten Ersatzteil 16 passenden Produktionsdaten bei dem Maschinenhersteller angefordert werden. Beispielsweise könnte die Recheneinheit 11 entsprechende Daten/Signale von der Maschinensteuerung erhalten, woraufhin diese die Anforderungsdaten an die Recheneinheit 13 sendet.

Was die Anforderungsdaten betrifft, so umfassen diese in der Regel das zu ersetzende Bauteil 30 identifizierende Daten - Identifizierungsdaten -, auf Basis derer bzw. anhand derer die für das jeweilige Ersatzteil 16 passenden Produktionsdaten von der Recheneinheit 13 zur Verfügung gestellt werden können. Beispielsweise können die passenden Produktionsdaten aus einer der Recheneinheit 13 zugeordneten Datenbank ausgewählt werden, in der zu unterschiedlichen Ersatzteilen 16 jeweils zu diesen passendende Produktionsdaten auswählbar abgespeichert sind.

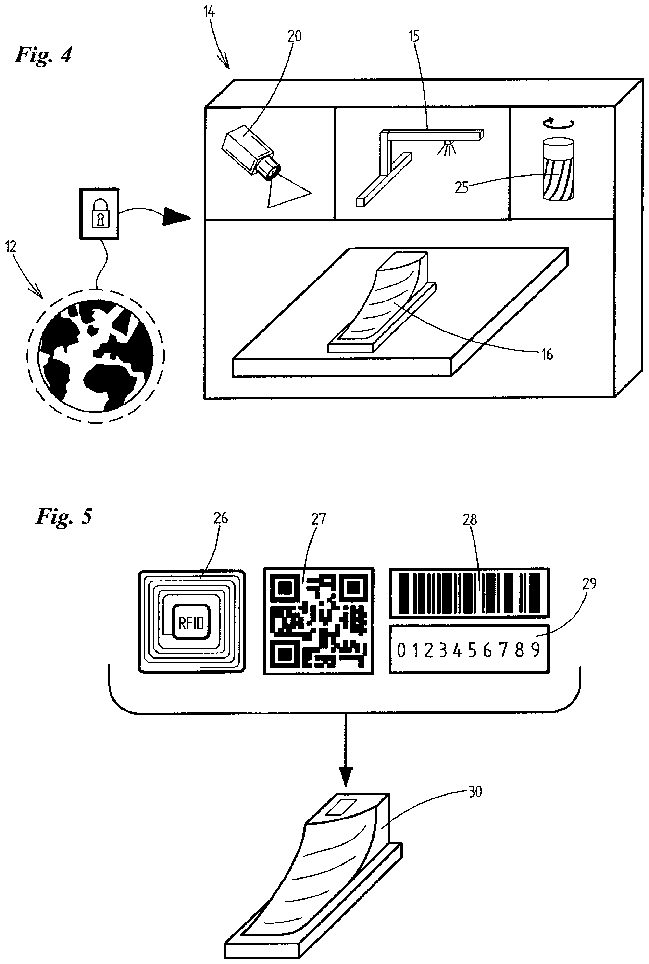

Es kann auch vorgesehen sein, dass, nachdem ein Bediener oder die Maschinensteuerung erkannt haben, dass ein Ersatzteil 16 benötigt wird, Identifizierungsdaten, die auf dem zu ersetzenden Bauteil 30 aufgebracht sind, vgl. Fig. 1 und 5, insbesondere mit einem geeigneten Lesegerät 18, beispielsweise einem Barcodescanner oder dergleichen, erfasst werden (oder auch visuell ohne Lesegerät durch einen Bediener), und dass diese Daten dann der Recheneinheit 13 übermittelt werden. Diese Erfassung - mit oder ohne Lesegerät - kann sowohl automatisch erfolgen, veranlasst durch die Maschinensteuerung, als auch durch einen Bediener.

Die zu erfassenden Identifizierungsdaten können dabei auf einem dem Bauteil 30 zugeordneten, insbesondere an diesem angeordneten elektronischen Speicher 26, wie etwa einem RFID oder NFC-Chip auslesbar gespeichert sein, oder dem Bauteil 30 als 2D-Code 27 oder Barcode 28 oder alphanumerische Bauteilkennung 29 zugeordnet bzw. an diesem angeordnet sein.

Denkbar ist natürlich auch, dass die entsprechenden Identifizierungsdaten, wie etwa die Bauteilkennung, einer Betriebsanleitung 19 zu dem jeweiligen zu ersetzenden Bauteil 30 entnommen und der Recheneinheit 13 übermittelt werden.

Alternativ ist auch denkbar, dass ein sogenannter 3D-Scanner 20 das zu ersetzende Bauteil 30 vermisst und diese Messdaten als Identifizierungsdaten dem Maschinenhersteller bzw. der Recheneinheit 13 übermittelt. Der Maschinenhersteller bzw. die diesem zugeordnete Recheneinheit 13 kann dann anhand dieser Daten erkennen, um welches Bauteil 30 es sich handelt, - wie oben angedeutet - die passenden Produktionsdaten aus der Datenbank auswählen und dem Maschinenbenutzer zur Verfügung stellen.

Wie der Fachmann erkennt, gibt es eine Vielzahl von Varianten und Möglichkeiten für die Art und Weise, wie dem Hersteller mitgeteilt werden kann, zu welchem Ersatzteil 16 er Produktionsdaten liefern soll.

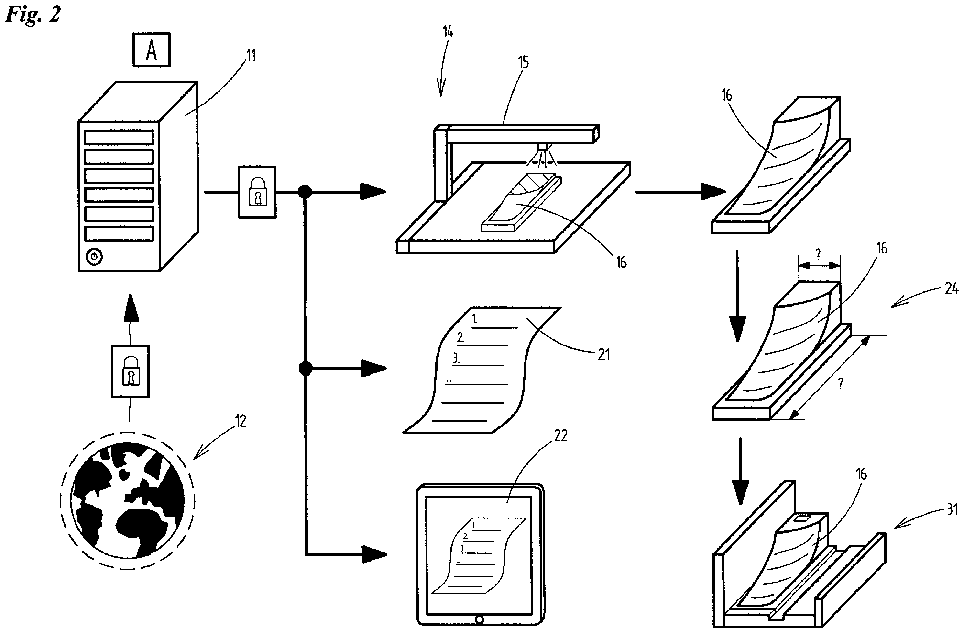

Nachdem der Recheneinheit 11 von der Recheneinheit 13 die richtigen Produktionsdaten zur Verfügung gestellt wurden, kann die Herstelleinrichtung 14 bzw. der 3D-Drucker 15 - wie oben ebenfalls angedeutet - auf Basis dieser Produktionsdaten das jeweilige Ersatzteil 16 fertigen bzw. drucken, vgl. Fig. 2.

Es kann dabei vorgesehen sein, dass die zur Verfügung gestellten Produktionsdaten nicht nur Steuerungsdaten zur Steuerung des 3D-Druckers umfassen, sondern darüber hinaus auch - beispielsweise als Datei-Dokument - in elektronischer Form Arbeitsanweisungen, die entweder ausdruckbar sind, vgl. Arbeitsanweisungen 21, oder die auf einem Endgerät, wie etwa einem PC bzw. dessen Monitor, einem Handheld oder einem Tablet-PC lesbar sind, vgl. Arbeitsanweisungen 22.

Diese Arbeitsanweisungen 21, 22 können Anweisungen an den jeweiligen Werker vor Ort umfassen, der mit der Herstellung des Ersatzteils 16 betraut ist bzw. der die Herstellung desselben durch die Herstelleinrichtung 14 begleitet. Die Arbeitsanweisungen 21, 22 können beispielsweise auch Informationen zur Detailkonfiguration der Herstelleinrichtung 14, insbesondere des 3D-Druckers 15 enthalten, Anweisungen zur Qualitätskontrolle des von dieser gefertigten Ersatzteils 16, Anweisungen zu Nachbearbeitungsschritten, Anweisungen zur Montage des gefertigten Bauteils 16 in die Verpackungsmaschine 10 bzw. zum vorherigen Ausbau des zu ersetzenden Bauteils 30 und dergleichen mehr.

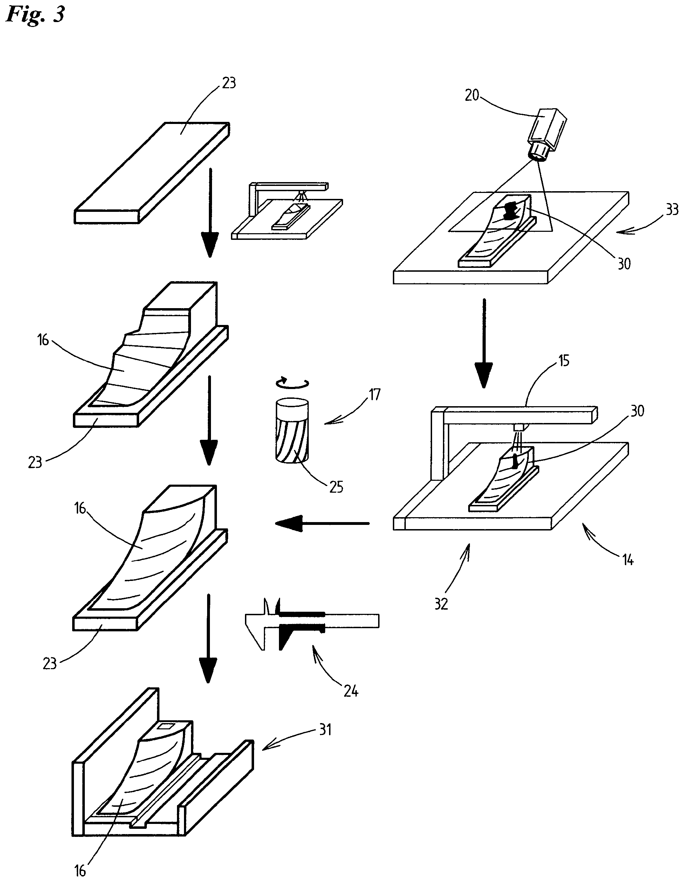

Wie in den Fig. 2 und 3 gezeigt ist, kann es für die Fertigung des Ersatzteils 16 erforderlich sein, ein Rohteil 23 in die Ersatzteilherstelleinrichtung 14 einzulegen. Ein solches Erfordernis könnte ebenfalls in der Arbeitsanweisung 21, 22 enthalten sein.

Die Herstellungseinrichtung 14 würde dann auf das Rohteil 23 den entsprechenden "Druck" aufbringen bzw. das Rohteil 23 würde beispielsweise als Träger für die von dem 3D-Drucker 15 aufzubringenden Materialien dienen.

Nach der Fertigung des Ersatzteils 16 kann eine Qualitätskontrolle erforderlich sein, vgl. Bezugsziffer 24 in den Fig. 2, 3.

Weiter kann es erforderlich sein, das aus der Herstelleinrichtung 14 kommende Teil nachzuarbeiten, vgl. Bezugsziffer 17 in Fig. 3, beispielsweise mit einer Werkzeugmaschine 25.

Schließlich muss das gefertigte Ersatzteil 16 in die Maschine 10 montiert werden, vgl. Bezugsziffer 31 in den Fig. 2, 3.

In einer weiteren Ausführungsform der Erfindung ist es auch denkbar, das verschlissene bzw. nicht mehr funktionsfähige Bauteil 30 selbst in den 3D-Drucker 15 zu legen und die Defekte bzw. den Verschleiß entsprechend zu überdrucken. Dabei wird das Druckmaterial am Ort des Defekts/Verschleißes so auf das Bauteil 30 aufgebracht, dass der Defekt/der Verschleiß ausgeglichen ist, vgl. Bezugsziffer 32 in Fig. 3, sodass das Bauteil 30 wieder einsatz- bzw.funktionsfähig ist.

Zu diesem Zweck ist es sinnvoll, wenn das Bauteil 30 zuvor mittels 3D-Scanner 20 vermessen wird, vgl. Bezugsziffer 33 in Fig. 3, um den Verschleiß bzw. die Defekte zu erfassen, und um den 3D-Drucker 15 anschließend korrekt steuern zu können bzw. so einstellen zu können, dass der jeweilige Defekt/der jeweilige Verschleiß entsprechend überdruckt wird.

In einer Kombination der oben beschriebenen Konzepte kann auch vorgesehen sein, die Herstelleinrichtung 14 als eigenes Gerät auszubilden, das sowohl den 3D-Drucker 15 als auch den 3D-Scanner 20 umfasst. Daneben kann diese Einrichtung auch noch die Werkzeugmaschine 25 zum Nachbearbeiten umfassen.

Mit einer solchen Herstelleinrichtung 14 könnte jedes mit der entsprechenden Herstelleinrichtung 14 herstellbares Bauteil 16 vermessen und nachproduziert werden. Dies theoretisch sogar, ohne dass der vorherige Empfang entsprechender Produktionsdaten durch die Recheneinheit 11 notwendig wäre. Aus der Analyse der per 3D-Scan ermittelten Daten für das zu ersetzenden Bauteil 30 könnten die notwendigen Produktionsdaten für das passende Ersatzteil 16 unmittelbar ermittelt werden, ggf. durch die Herstelleinrichtung 14 selbst.

### Bezugszeichenliste

- 10: Verpackungsmaschine
- 11: Recheneinheit
- 12: Kommunikationsnetz
- 13: Recheneinheit
- 14: Ersatzteilherstellungseinrichtung
- 15: 3D-Drucker
- 16: Ersatzteil
- 17: Nachbearbeitung
- 18: Lesegerät
- 19: Betriebsanleitung
- 20: 3D-Scanner
- 21: Arbeitsanweisung
- 22: Arbeitsanweisung
- 23: Rohteil
- 24: Qualitätskontrolle
- 25: Werkzeugmaschine
- 26: Elektronischer Speicher
- 27: 2D-Code
- 28: Barcode
- 29: Bauteilkennung
- 30: zu ersetzendes Bauteil
- 31: Montage
- 32: Überdrucken
- 33: Scannen

## Patentansprüche

1. Verfahren zum Herstellen von Ersatzteilen (16) für eine Maschine zur Herstellung von Verpackungen für rauchbare Produkte - Verpackungsmaschine (10) -, insbesondere für Zigaretten, mit folgenden Schritten:
a) Prüfen des Verschleißes und/oder der Funktionsfähigkeit von mindestens einem Bauteil (30), das als Ersatzteil (16) von einer einem Maschinenbenutzer zugeordneten, einen 3D-Drucker (15) umfassenden Ersatzteilherstelleinrichtung (14) herstellbar ist, durch die Verpackungsmaschine im Betrieb der Verpackungsmaschine,
b) Anfordern einer Übermittlung von Produktionsdaten für die Herstellung eines Ersatzteils (16) für das Bauteil (30), wenn ein Verschleiß und/oder eine Funktionsunfähigkeit des Bauteils (30) festgestellt wird, der/die einen Austausch desselben erforderlich macht, von einer ersten, insbesondere dem Hersteller der Maschine (10) zugeordneten Recheneinheit (13) durch eine zweite, insbesondere dem Benutzer der Maschine (10) zugeordnete Recheneinheit (11) per Datenfernübertragung, vorzugsweise über ein Kommunikationsnetzwert, etwa das Internet,
c) Verschlüsseln von für die Produktion des Ersatzteils (16) erforderlichen, digitalen Produktionsdaten,
d) Übermitteln der verschlüsselten Produktionsdaten von einer ersten, insbesondere dem Hersteller der Maschine (10) zugeordneten Recheneinheit (13), zu einer zweiten, insbesondere dem Benutzer der Maschine (10) zugeordneten Recheneinheit (11) per Datenfernübertragung, vorzugsweise über ein Kommunikationsnetzwerk, etwa das Internet,
e) Entschlüsseln der übermittelten, verschlüsselten Produktionsdaten,
f) Herstellen des Ersatzteils (16) mit der dem Maschinenbenutzer zugeordneten, einen 3D-Drucker (15) umfassenden Ersatzteilherstelleinrichtung (14) nach Maßgabe der übermittelten Produktionsdaten,

2. Verfahren gemäß Anspruch 1, **dadurch gekennzeichnet, dass** die Übermittlung der Produktionsdaten angefordert wird, insbesondere initiiert durch die zweite Recheneinheit (11), bevorzugt, indem der ersten Recheneinheit (13) von der zweiten Recheneinheit (11) entsprechende Anforderungsdaten übermittelt werden.

3. Verfahren gemäß Anspruch 2, **dadurch gekennzeichnet, dass** die Anforderungsdaten Daten zur Feststellung der Berechtigung der Anforderung der Produktionsdaten umfassen - Authentifizierungsdaten -, dass die Authentifizierungsdaten geprüft werden, insbesondere von der ersten Recheneinheit (13), und dass die Übermittlung der Produktionsdaten nur erfolgt, wenn die Prüfung ergibt, dass die Anfrage berechtigt ist.

4. Verfahren gemäß einem oder mehreren der vorhergehenden Ansprüche, **dadurch gekennzeichnet, dass** das durch das Ersatzteil (16) zu ersetzende Bauteil (30) identifizierende Identifizierungsdaten an die erste Recheneinheit (13) übermittelt werden, wie etwa eine Bauteilkennung oder das Bauteil beschreibende Bilddaten, insbesondere als Teil der Anforderungsdaten.

5. Verfahren gemäß Anspruch 4, **dadurch gekennzeichnet, dass** anhand der Identifizierungsdaten aus einer Menge von in einer insbesondere der ersten Recheneinheit (13) zugeordneten Datenbank auswählbar abgespeicherten Produktionsdaten zur Herstellung von mittels der Herstelleinrichtung fertigbaren Ersatzteilen (16) für die Maschine (10) die zu den übermittelten Identifizierungsdaten hinterlegten Produktionsdaten ausgewählt werden, insbesondere von der ersten Recheneinheit (13), und dass die ausgewählten Produktionsdaten der zweiten Recheneinheit (11) übermittelt werden.

6. Verfahren gemäß Anspruch 4 oder 5, **dadurch gekennzeichnet, dass** die Identifizierungsdaten dem als Ersatzteil (16) produzierbaren Bauteil (30) der Verpackungsmaschine (10) auslesbar zugeordnet, insbesondere an diesem angeordnet sind, dass diese Identifizierungsdaten, insbesondere mittels eines Lesegeräts (18), ausgelesen werden, und dass die Identifizierungsdaten an die erste Recheneinheit (13) übermittelt werden, bevorzugt als Teil der Anforderungsdaten.

7. Verfahren gemäß Anspruch 4, 5 oder 6, **dadurch gekennzeichnet, dass** mittels einer optische Erfassungseinheit (20), insbesondere einer optischen Vermessungseinheit, wie etwa einem 3D-Scanner, das durch ein Ersatzteil (16) zu ersetzende Bauteil (30) erfasst wird, und dass die gemessenen Daten als Identifizierungsdaten an die erste Recheneinheit (13) übermittelt werden.

8. Verfahren gemäß einem oder mehreren der vorhergehenden Ansprüche, **dadurch gekennzeichnet, dass** die Produktionsdaten Steuerungsdaten für eine Steuerungseinrichtung der Ersatzteilherstelleinrichtung (14) umfassen, nach Maßgabe derer die Steuereinrichtung die Ersatzteilherstelleinrichtung (14) während der Herstellung des Ersatzteils (16) steuert.

9. Verfahren gemäß einem oder mehreren der vorhergehenden Ansprüche, **dadurch gekennzeichnet, dass** die Produktionsdaten den Herstellungsprozess des Ersatzteils (16) in der Ersatzteilherstelleinrichtung (14) betreffende Handlungsanweisungen (21, 22) für einen den Herstellungsprozess begleitenden Werker umfassen, und/oder mindestens ein Maschinenprogramm für die Steuerung von mindestens einer dem Maschinenbenutzer zugeordneten Werkzeugmaschine (25), das derart ausgebildet ist, dass das Ersatzteil (16) mit der Werkzeugmaschine (25) nachbearbeitet werden kann.

10. Verfahren gemäß einem oder mehreren der vorhergehenden Ansprüche, **dadurch gekennzeichnet, dass** die Qualität des hergestellten Ersatzteil (16) geprüft wird, insbesondere mittels einer geeigneten, etwa eine optische Vermessungseinrichtung (20) umfassenden Prüfeinrichtung, und dass für den Fall, dass die Prüfung ergibt, dass das Ersatzteil (16) vorbestimmte Qualitätskriterien erfüllt, diesen Umstand repräsentierende Freigabedaten an die zweite Recheneinheit übersandt werden.

11. Verfahren gemäß Anspruch 10, **dadurch gekennzeichnet, dass** nach Maßgabe der Freigabedaten dem Ersatzteil (16) ein Freigabecode zugeordnet, insbesondere auf das Ersatzteil (16) oder auf einen mit dem Ersatzteil (16) verbindbaren Freigabecodeträger aufgebracht wird, vorzugsweise durch die Ersatzteilherstelleinrichtung (14).

12. Verfahren zum Herstellen von Ersatzteilen (16) für eine Maschine zur Herstellung von Verpackungen für rauchbare Produkte - Verpackungsmaschine (10) -, insbesondere für Zigaretten, mit folgenden Schritten:
a) Prüfen des Verschleißes und/oder der Funktionsfähigkeit von mindestens einem Bauteil (30), das als Ersatzteil (16) von einer einem Maschinenbenutzer zugeordneten, einen 3D-Drucker (15) umfassenden Ersatzteilherstelleinrichtung (14) herstellbar ist, durch die Verpackungsmaschine im Betrieb der Verpackungsmaschine,
b) Vermessen eines Ersatzteils (16) mittels eines dem Maschinenbenutzer zugeordneten, optischen Vermessungsgeräts (20), insbesondere eines 3D-Scanners, wenn ein Verschleiß und/oder eine Funktionsunfähigkeit des Bauteils (30) festgestellt wird, der/die einen Austausch desselben erforderlich macht,
c) Herstellen des Ersatzteils (16) nach Maßgabe der Messdaten mittels einer dem Maschinenbenutzer zugeordneten, einen 3D-Drucker (15) umfassenden Ersatzteilherstelleinrichtung (14).

13. Verfahren gemäß Anspruch 12, **gekennzeichnet durch** folgende weitere Schritte:
d) Übermitteln von das Ersatzteil (16) identifizierenden Daten an eine erste, insbesondere dem Maschinenhersteller zugeordnete Recheneinheit (13),
e) Übermitteln eines Freigabecodes an den Maschinenbenutzer,
f) Freischalten der dem Maschinenbenutzer zugeordneten Ersatzteilherstelleinrichtung (14) mittels des Freigabecodes, sodass die Ersatzteilherstelleinrichtung (14) anschließend das Ersatzteil (16) nach Maßgabe der Messdaten herstellen kann,
g) Herstellen des Ersatzteils durch die freigeschaltete Ersatzteilherstelleinrichtung (14).

## Claims

1. Method for producing spare parts (16) for a machine for producing packs for smokable products - a packaging machine (10) - in particular for cigarettes, comprising the following steps:
a) checking the wear and/or the serviceability of at least one component (30), which can be produced as a spare part (16) by means of a spare part production device (14) associated with a machine user and comprising a 3D printer (15), by means of the packaging machine during operation of the packaging machine,
b) requesting the transmission of production data for the production of a spare part (16) for the component (30) when wear and/or unserviceability of the component (30) which makes replacement of the same necessary is determined, from a first computing unit (13), in particular associated with the manufacturer of the machine (10), by means of a second computing unit (11), in particular associated with the user of the machine (10), by remote data transmission, preferably via a communication network, for example the Internet,
c) encrypting digital production data required for the production of the spare part (16),
d) transmitting the encrypted production data from a first computing unit (13), in particular associated with the manufacturer of the machine (10), to a second computing unit (11), in particular associated with the user of the machine (10), by remote data transmission, preferably via a communication network, for example the Internet,
e) decrypting the transmitted, encrypted production data,
f) producing the spare part (16) according to the transmitted production data by means of the spare part production device (14) associated with the machine user and comprising a 3D printer (15).

2. Method according to Claim 1, **characterized in that** the transmission of the production data is requested, in particular initiated, by the second computing unit (11), preferably by appropriate request data being transmitted from the second computing unit (11) to the first computing unit (13).

3. Method according to Claim 2, **characterized in that** the request data comprises data for establishing the authorization of the request for the production data - authentication data -, **in that** the authentication data is checked, in particular by the first computing unit (13), and **in that** the transmission of the production data is carried out only if the result of the check is that the request is authorized.

4. Method according to one or more of the preceding claims, **characterized in that** identification data identifying the component (30) to be replaced by the spare part (16) is transmitted to the first computing unit (13), such as a component identification or image data describing the component, in particular as part of the request data.

5. Method according to Claim 4, **characterized in that** by using the identification data, from a set of stored production data which can be selected from a database, in particular associated with the first computing unit (13), for the production of spare parts (16) which can be produced for the machine (10) by means of the production device, the production data relating to the transmitted identification data is selected, in particular by the first computing unit (13), and **in that** the selected production data is transmitted to the second computing unit (11).

6. Method according to Claim 4 or 5, **characterized in that** the identification data is legibly assigned to the component (30) of the packaging machine (10) that can be produced as a spare part (16), in particular is arranged on said component, **in that** this identification data is read, in particular by means of a reading device (18), and **in that** the identification data is transmitted to the first computing unit (13), preferably as part of the request data.

7. Method according to Claim 4, 5 or 6, **characterized in that** the component (30) to be replaced by a spare part (16) is detected by means of an optical detection unit (20), in particular an optical measuring unit, such as a 3D scanner, and **in that** the measured data is transmitted to the first computing unit (13) as identification data.

8. Method according to one or more of the preceding claims, **characterized in that** the production data comprises control data for a control device of the spare part production device (14), according to which the control device controls the spare part production device (14) during the production of the spare part (16) .

9. Method according to one or more of the preceding claims, **characterized in that** the production data comprises handling instructions (21, 22) relating to the handling process of the spare part (16) in the spare part production device (14) for a worker accompanying the production process, and/or at least one machine program for the control of a least one machine tool (25) which is assigned to the machine user and which is designed in such a way that the spare part (16) can be re-machined by using the machine tool (25).

10. Method according to one or more of the preceding claims, **characterized in that** the quality of the spare part (16) produced is checked, in particular by means of a suitable testing device comprising an optical measuring device (20), for example, and **in that** for the case in which the result of the check is that the spare part (16) fulfils predetermined quality criteria, release data representing this circumstance is transmitted to the second computing unit.

11. Method according to Claim 10, **characterized in that** according to the release data, the spare part (16) is assigned a release code, in particular applied to the spare part (16) or to a release code carrier that can be connected to the spare part (16), preferably by the spare part production device (14).

12. Method for producing spare parts (16) for a machine for producing packs for smokable products - a packaging machine (10) - in particular for cigarettes, comprising the following steps:
a) checking the wear and/or the serviceability of at least one component (30), which can be produced as a spare part (16) by means of a spare part production device (14) associated with a machine user and comprising a 3D printer (15), by means of the packaging machine during operation of the packaging machine,
b) measuring a spare part (16) by means of an optical measuring device (20) associated with the machine user, in particular a 3D scanner, when wear and/or unserviceability of the component (30) which makes replacement of the same necessary is determined,
c) producing the spare part (16) according to the measured data by means of a spare part production device (14) associated with the machine user and comprising a 3D printer (15).

13. Method according to Claim 12, **characterized by** the following further steps:
d) transmitting data identifying the spare part (16) to a first computing unit (13), in particular associated with the machine manufacturer,
e) transmitting a release code to the machine user,
f) enabling the spare part production device (14) associated with the machine user by means of the release code, so that the spare part production device (14) can then produce the spare part (16) according to the measured data,
g) producing the spare part by means of the enabled spare part production device (14).

## Revendications

1. Procédé de fabrication de pièces de rechange (16) destinées à une machine de fabrication d'emballages pour produits fumables, machine d'emballage (10), en particulier pour cigarettes, comprenant les étapes suivantes consistant à :
a) vérifier l'usure et/ou la capacité fonctionnelle d'au moins un composant (30) pouvant être fabriqué en tant que pièce de rechange (16) par un dispositif de fabrication de pièces de rechange (14) comprenant une imprimante 3D (15) et attribué à un utilisateur de machine, par la machine d'emballage en cours de fonctionnement de la machine d'emballage,
b) demander une transmission de données de production pour la fabrication d'une pièce de rechange (16) pour le composant (30) si une usure et/ou une incapacité fonctionnelle du composant (30) sont établies qui nécessitent l'échange de celui-ci, d'une première unité de calcul (13), en particulier attribuée au fabricant de la machine (10), par une deuxième unité de calcul (11) attribuée en particulier à l'utilisateur de la machine (10) par télétransmission de données, de préférence par l'intermédiaire d'un réseau de communication, par exemple l'internet,
c) crypter des données de production numériques nécessaires à la production de la pièce de rechange (16),
d) transmettre les données de production cryptées d'une première unité de calcul (13), en particulier attribuée au fabricant de la machine (10) à une deuxième unité de calcul (11), en particulier attribuée à l'utilisateur de la machine (10) par télétransmission de données, de préférence par l'intermédiaire d'un réseau de communication, par exemple l'internet,
e) décrypter les données de production cryptées transmises,
f) fabriquer la pièce de rechange (16) par le dispositif de fabrication de pièces de rechange (14) comprenant une imprimante 3D (15) et attribué à l'utilisateur de machine conformément aux données de production transmises.

2. Procédé selon la revendication 1, **caractérisé en ce que** la transmission des données de production est demandée, en particulier initiée par la deuxième unité de calcul (11), de préférence **en ce que** des données de demande correspondantes sont transmises à la première unité de calcul (13) par la deuxième unité de calcul (11) .

3. Procédé selon la revendication 2, **caractérisé en ce que** les données de demande comprennent des données pour établir l'autorisation de la demande des données de production, données d'authentification, **en ce que** les données d'authentification sont vérifiées, en particulier par la première unité de calcul (13), et **en ce que** la transmission des données de production n'est effectuée que si la vérification indique que la demande est autorisée.

4. Procédé selon une ou plusieurs des revendications précédentes, **caractérisé en ce que** des données d'identification identifiant le composant (30) à remplacer par la pièce de rechange (16) sont transmises à la première unité de calcul (13), par exemple un identifiant de composant ou des données graphiques décrivant le composant, en particulier dans le cadre des données de demande.

5. Procédé selon la revendication 4, **caractérisé en ce qu'**à l'aide des données d'identification, parmi une quantité de données de production, mémorisées de manière sélectionnable dans une base de données attribuée en particulier à la première unité de calcul (13), pour la fabrication de pièces détachées (16) pour la machine (10), pouvant être fabriquées au moyen du dispositif de fabrication, les données de production mémorisées au sujet des données d'identification transmises sont sélectionnées, en particulier par la première unité de calcul (13), et **en ce que** les données de production sélectionnées sont transmises à la deuxième unité de calcul (11).

6. Procédé selon la revendication 4 ou 5, **caractérisé en ce que** les données d'identification sont attribuées de manière lisible au composant (30) de la machine d'emballage (10) pouvant être produit en tant que pièce de rechange (16), en particulier **en ce qu'**elles sont disposées sur celui-ci, en particulier **en ce qu'**elles sont lues au moyen d'un lecteur (18), et **en ce que** les données d'identification sont transmises à la première unité de calcul (13), de préférence dans le cadre des données de demande.

7. Procédé selon la revendication 4, 5 ou 6, **caractérisé en ce qu'**au moyen d'une unité de détection optique (20), en particulier au moyen d'une unité de mesure optique, par exemple un scanner 3D, le composant (30) à remplacer par une pièce de rechange (16) est détecté, et **en ce que** les données mesurées sont transmises à la première unité de calcul (13) sous forme de données d'identification.

8. Procédé selon une ou plusieurs des revendications précédentes, **caractérisé en ce que** les données de production comprennent des données de commande pour un dispositif de commande du dispositif de fabrication de pièces de rechange (14), conformément auxquelles le dispositif de commande commande le dispositif de fabrication de pièces de rechange (14) pendant la fabrication de la pièce de rechange (16).

9. Procédé selon une ou plusieurs des revendications précédentes, **caractérisé en ce que** les données de production comprennent des instructions de manipulation (21, 22) concernant le processus de fabrication de la pièce de rechange (16) dans le dispositif de fabrication de pièces de rechange (14), destinées à un travailleur accompagnant le processus de fabrication, et/ou au moins un programme de machine pour la commande d'au moins une machine-outil (25) attribuée à l'utilisateur de machine, ledit programme étant réalisé de telle sorte que la pièce de rechange (16) peut être réusinée par la machine-outil (25).

10. Procédé selon une ou plusieurs des revendications précédentes, **caractérisé en ce que** la qualité de la pièce de rechange (16) fabriquée est vérifiée, en particulier au moyen d'un dispositif de vérification comprenant par exemple un dispositif de mesure optique (20), et **en ce que** dans le cas où la vérification indique que la pièce de rechange (16) remplit des critères de qualité prédéterminés, des données de validation représentant cette situation sont envoyées à la deuxième unité de calcul.

11. Procédé selon la revendication 10, **caractérisé en ce que** conformément aux données de validation, un code de validation est attribué à la pièce de rechange (16), en particulier appliqué à la pièce de rechange (16) ou à un support de code de validation pouvant être relié à la pièce de rechange (16), de préférence par le dispositif de fabrication de pièces de rechange.

12. Procédé de fabrication de pièces de rechange (16) destinées à une machine de fabrication d'emballages pour produits fumables, machine d'emballage (10), en particulier pour cigarettes, comprenant les étapes suivantes consistant à :
a) vérifier l'usure et/ou la capacité fonctionnelle d'au moins un composant (30) pouvant être fabriqué en tant que pièce de rechange (16) par un dispositif de fabrication de pièces de rechange (14) comprenant une imprimante 3D (15) et attribué à un utilisateur de machine, par la machine d'emballage en cours de fonctionnement de la machine d'emballage,
b) mesurer une pièce de rechange (16) au moyen d'un appareil de mesure optique (20) attribué à l'utilisateur de machine, en particulier un scanner 3D, si une usure et/ou une incapacité fonctionnelle du composant (30) sont établies qui nécessitent un remplacement de celui-ci,
c) fabriquer la pièce de rechange (16) conformément aux données de mesure au moyen d'un dispositif de fabrication de pièces de rechange (14) comprenant une imprimante 3D (15) et attribué à l'utilisateur de machine.

13. Procédé selon la revendication 12, **caractérisé par** les étapes supplémentaires suivantes consistant à :
d) transmettre des données identifiant la pièce de rechange (16) à une première unité de calcul (13), en particulier attribuée au fabricant de machine,
e) transmettre un code de validation à l'utilisateur de machine,
f) débloquer le dispositif de fabrication de pièces de rechange (14) attribué à l'utilisateur de machine au moyen du code de validation de sorte que le dispositif de fabrication de pièces de rechange (14) peut ensuite fabriquer la pièce de rechange (16) conformément aux données de mesure,
g) fabriquer la pièce de rechange par le dispositif de fabrication de pièces de rechange (14) débloqué.
